# EUROPÄISCHE PATENTSCHRIFT

(11) **EP 3 208 681 B1**
(45) Veröffentlichungstag und Bekanntmachung des Hinweises auf die Patenterteilung: **19.05.2021**
(21) Anmeldenummer: 17155305.0
(22) Anmeldetag: 08.02.2017
(51) Int. Cl.: G06N 20/00, G05D 23/19

(54) **STEUERUNGSVERFAHREN FÜR EIN KÜHLSYSTEM MIT VARIABLER KÜHLLEISTUNG SOWIE KÜHLSYSTEM**
CONTROL METHOD FOR A COOLING SYSTEM WITH VARIABLE COOLING POWER AND COOLING SYSTEM
PROCÉDÉ DE COMMANDE D'UN SYSTÈME DE REFROIDISSEMENT AVEC PUISSANCE DE REFROIDISSEMENT VARIABLE, ET LE SYSTÈME DE REFROIDISSEMENT

(30) Priorität: 17.02.2016 DE 102016001824
(43) Veröffentlichungstag der Anmeldung: 23.08.2017
(73) Patentinhaber: Lelkes, Andras, 90491 Nürnberg (DE)
(72) Erfinder: Lelkes, Andras, 90491 Nürnberg (DE); Lelkes, Adam Daniel, 1064 Budapest (HU)

(56) Entgegenhaltungen:
- DE-A1- 3 409 321
- DE-A1-102008 017 326
- US-A1- 2009 204 279
- US-A1- 2012 185 728
- US-A1- 2013 174 010

## Beschreibung

Die Erfindung betrifft ein Steuerungsverfahren für ein Kühlsystem mit variabler Kühlleistung sowie ein Kühlsystem mit variabler Kühlleistung. Kühlsysteme werden oft eingesetzt, um Überhitzung von Anlagen zu verhindern. Bei Kühlsystemen mit variabler Kühlleistung wird die notwendige Kühlleistung meistens von einer überlagerten Einheit, zum Beispiel von einer überlagerten Steuerung, vorgegeben. Bei einer Fehlfunktion der überlagerten Einheit kann es zur Überhitzung der zu kühlenden Anlage mit negativen Folgen führen. Aufgabe der Erfindung ist deshalb ein Kühlsystem mit variabler Kühlleistung zu schaffen, das falsche Vorgaben für die Kühlleistung möglichst erkennen und korrigieren kann und so die Sicherheit der zu kühlenden Anlage erhöht.

Das einfachste Kühlsystem mit variabler Kühlleistung ist ein Ventilator (auch Lüfter genannt) mit variabler Drehzahl. Der Lüftermotor kann drehzahlgesteuert oder drehzahlgeregelt arbeiten. Die Drehzahl des Lüftermotors wird in Abhängigkeit von der notwendigen Kühlleistung durch eine externe Steuerung vorgegeben. Genügt auch eine kleinere Kühlleistung, wird die Drehzahl reduziert. Dadurch werden gleichzeitig die Leistungsaufnahme und der Geräuschpegel des Lüfters günstig beeinflusst (reduziert).

Bei allen solchen Lösungen besteht die Gefahr, dass durch einen (oder mehrfachen) Fehler in der überlagerten Steuerung oder in der Sollwertübertragung, eine zu niedrige Drehzahl eingestellt wird. In so einem Fall können große Schäden in der zu kühlenden Anlage entstehen. Mögliche Folgen sind unter anderem Qualitätsverlust in der Produktion (z.B. in der Lebensmittelindustrie), Reduzierung der Lebensdauer der Anlage, Ausfall der Anlage oder im schlimmsten Fall eine Explosion in der Anlage.

Dies zu verhindern überprüft das Kühlsystem (z.B. ein Lüfter mit veränderbarer Drehzahl) erfindungsgemäß den Wert des von der überlagerten Einheit gelieferten Sollwerts auf Plausibilität und bei Bedarf erhöht es autonom die Kühlleistung.

DE 10 2008 017 326 A1 beschreibt ein Verfahren zur Steuerung eines Lüfters für die Kühlanlage einer Wärmekraftmaschine, insbesondere in Kraftfahrzeugen. Bei Verlust der Datenübertragung kann eine Notlauffunktion aktiviert werden, wobei ein unerwünschter Lüfternotlauf eine beträchtliche Verletzungsgefahr für das Wartungs- oder Produktionspersonal darstellen kann. Die Lüftersteuereinheit steht mit zumindest einem weiteren Sensor in Verbindung. Die von diesem Sensor gelieferte Information wird für die Entscheidung benutzt, ob der Einsatz der Notlauffunktion im Falle eines Verlustes der Datenübertragung von der Motorsteuerung vermieden werden kann. Wenn keine Gefährdung des Motors durch thermische Überbeanspruchung vorliegt, wird die Drehzahl des Lüfters bei Verlust der Datenübertragung nicht erhöht.

US 2012/0185728 A1 beschreibt ein System und eine Methode zur Fehlererkennung und zur Diagnose in multivariabel Systemen, insbesondere in Heizung, Lüftung und Klimatechnik. Dabei werden die Betriebsdaten auf der Grundlage von Fehlererkennungsmodellen verarbeitet, um einen fehlerhaften Betrieb des Systems, zum Beispiel eines Kühlsystems, zu erkennen. Zu erkennende Fehler sind unter anderem mechanische Fehler, Ausfall oder Fehler von Sensoren, regelungstechnische Probleme, Designfehler und Bedienungsfehler. Der Ausgang des Fehlererkennungssystems kann von Diagnosewerkzeugen verwendet werden. Diese Werkzeuge diagnostizieren dann, welche spezielle Art von Fehlern aufgetreten ist, und lösen entsprechende Maßnahmen zur Behebung dieser Fehler aus.

Aus DE 20 2006 007 136 U1 ist eine Steuereinheit für einen Lüftermotor bekannt, die einen Leitungsbruch oder Kurzschluss bei der analogen Sollwertvorgabe erkennt und in einem Fehlerfall die Drehzahl des Lüftermotors erhöht, um die Risiken für eine Überhitzung der zu kühlenden Anlage zu verhindern. Neben einem analogen Sollwert gibt es jedoch viele andere Möglichkeiten, die Kühlleistung vorzugeben, wie ein digitales (z.B. getaktet moduliertes) Sollwertsignal (z.B. PWM- oder frequenzmoduliert) oder eine Sollwertvorgabe über einen Kommunikationskanal (z. B. ein Feldbus oder ein auf Internet basierter Kommunikationskanal). Andererseits können Fehler nicht nur bei der Sollwertübertragung vorkommen. Eine fehlerhafte Sollwertvorgabe kann zum Beispiel durch einen Software- oder einen Hardwarefehler in der überlagerten Einheit entstehen.

Deshalb wird vorgeschlagen, neben möglichen Maßnahmen für die Sicherung der Übertragung des Sollwertes, den Sollwert selber auf Plausibilität zu überprüfen. Falls der Sollwert den Plausibilitätstest nicht besteht, wird die Kühlleistung erhöht. Zum Beispiel bei einem Lüfter wird die Drehzahl erhöht. Dazu kann eine Drehzahl für solche Notfälle definiert sein. Im einfachsten Fall entspricht diese Drehzahl der maximal möglichen Drehzahl des Lüfters; es ist jedoch auch vorstellbar, die Drehzahl bei solchen Fällen in Abhängigkeit von anderen Systemgrößen zu bestimmen. Durch die Erhöhung der Drehzahl wird die Kühlleistung des Lüfters miterhöht und damit die Wahrscheinlichkeit einer Überhitzung der Anlage reduziert. Bei einem Fehlalarm andererseits ("falsch positiv"), also wenn das Kühlsystem die Sollwertvorgabe für nicht plausibel hält, obwohl sie richtig ist, bleiben die Folgen begrenzt: erhöhter Energieverbrauch und erhöhte Geräuschbildung. Wäre jedoch eine Fehlfunktion der überlagerten Einheit nicht erkannt ("falsch negativ"), wären die negativen Folgen wesentlich, manchmal sogar um mehrere Größenordnungen, höher.

Bei der Revidierung (Erhöhung) des von der überlagerten Steuerung vorgegeben Sollwertes für die Kühlleistung kann zusätzlich eine Warnung (zum Beispiel über das Bussystem) ausgegeben werden. In speziellen Fällen ist sogar die Abschaltung der Anlage oder ihrer Teile denkbar.

### Beschreibung der Zeichnungen:

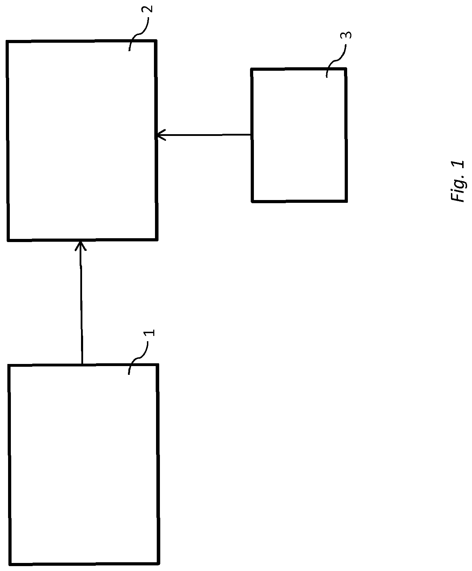

**Fig. 1** zeigt ein Kühlsystem (2) mit variabler Kühlleistung, gesteuert nach einem Verfahren gemäß Anspruch 1. Die Kühlung wird zum Beispiel durch Luftbewegung über einen Lüfter realisiert. Eine überlagerte Einheit (1) bestimmt durch einen Sollwert die gewünschte Kühlleistung. Der Lüfter (2) erhält außerdem einen Temperaturwert von einem zusätzlichen Temperatursensor (3). Der Lüfter (2) kann anhand des vom zusätzlichen Temperatursensor (3) gelieferten Temperaturwertes die Vorgabe der überlagerten Einheit (1) auf Plausibilität überprüfen. Beim Verdacht auf eine fehlerhafte Vorgabe erhöht der Lüfter (2) vorsichtshalber seine Drehzahl.

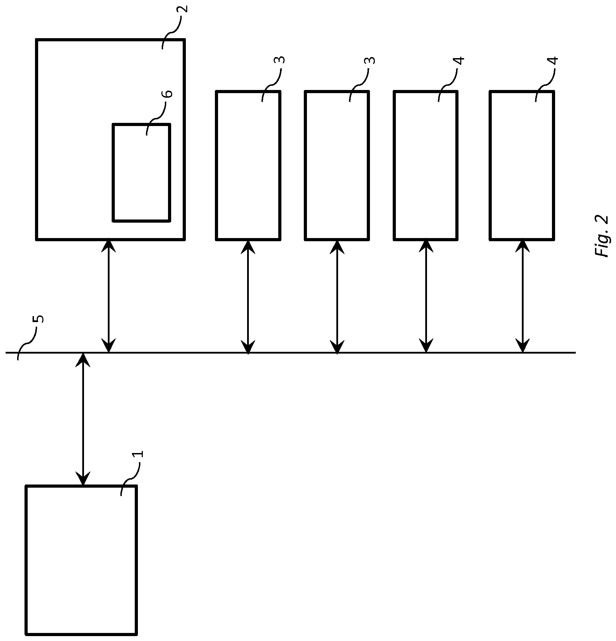

**Fig. 2** zeigt eine weitere beispielhafte Realisierung der Erfindung. Die überlagerte Einheit (1) liefert über einen Kommunikationskanal (5) einen Sollwert für einen Lüfter (2). Der Lüfter (2) erhält über den gleichen Kommunikationskanal (5) Informationen von verschiedenen Sensoren (3) und Aktoren (4). Der Lüfter (2) ist erfindungsgemäß mit einer lernfähigen Einheit (6) ergänzt. Diese lernfähige Einheit (6) hat die Aufgabe, aus den zur Verfügung stehenden Informationen die für die ausreichende Kühlung der zu kühlenden Anlage notwendige Motordrehzahl vorherzusagen. Ist der berechnete Wert der für den sicheren Betrieb notwendigen Motordrehzahl höher, als die Vorgabe der überlagerten Einheit (1), erhöht der Lüfter (2) autonom seine Drehzahl.

In einer ersten Ausführung der Erfindung erhält das Kühlsystem, zum Beispiel die Motorsteuerung der Lüftereinheit, zusätzlich zum Sollwert auch einen oder mehrere Temperaturmesswerte.

In einer einfachen beispielhaften Realisierung der Erfindung wird dazu ein analoger Temperatursensor (z.B. ein NTC) verwendet, dessen Signal in einem Analog-Digital-Wandler (am besten in dem zur Steuerung verwendeten Mikrocontroller integriert) ausgewertet und weitergeleitet wird. Der besagte Temperatursensor kann die Temperatur an einem bestimmten Punkt in der zu kühlenden Anlage (bzw. Gerät) oder die Temperatur des Kühlmittels, z.B. der Kühlluft, messen. In einem günstigen Ausführungsbeispiel wird der Temperatursensor kostengünstig direkt in die Kommutierungselektronik eines bürstenlosen Kompaktlüfters platziert. Dadurch erübrigen sich die Befestigung des externen Sensors, die Verdrahtung sowie die sonst eventuell notwendigen Steckverbinder. Andererseits darf man hier die Eigenerwärmung des Lüftermotors nicht vernachlässigen. Ein möglicher Weg diese Eigenerwärmung in Betracht zu ziehen ist, die Steuerung mit einem Temperaturmodell zu ergänzen. Unter Umständen kann ein einfaches Modell mit einer einzigen Zeitkonstante ausreichend sein.

Wird der Sollwert dem Kühlsystem über einen Kommunikationskanal wie Feldbus oder durch internetbasierte Kommunikation mitgeteilt, kann ohne zusätzliche Hardwarebausteine und ohne zusätzliche Stecker und Kabel auch der Messwert anderer Temperatursensoren dem Kühlsystem mitgeteilt werden. Bei einer Internetverbindung ist es außerdem möglich, Temperaturwerte von externen Diensten zu besorgen und zu bewerten, wie die Außentemperatur, geliefert zum Beispiel von einem Wetterdienst.

Eine erfindungsgemäße Verwendung der Temperaturwerte ist die Festsetzung einer temperaturabhängigen Mindestdrehzahl. Dieser Wert kann zum Beispiel tabellarisch in der Lüftersteuerung (z.B. in der Kommutierungselektronik bei einem elektronisch kommutierten Lüftermotor oder in dem den Asynchron-Lüftermotor speisenden Frequenzumrichter) gespeichert werden. Die Werte in der besagten Tabelle können temperaturabhängig vorgegeben werden. Die Temperaturwerte selber können in einer beliebigen Skalierung (z.B. in C°, F°, K) bearbeitet werden. Bei direkt angeschlossenem Temperatursensor (z.B. NTC) kann aber auch unmittelbar der Signalwert des Temperatursensors benutzt werden. Dieser Signalwert steht oft in einem nicht-linearen Zusammenhang mit der gemessen Temperatur. Bei der letzteren Lösung ist keine zusätzliche Umwandlung des Ausgangssignals in einen expliziten Temperaturwert (z.B. in °C) notwendig.

Ist die Sollwertvorgabe für die Kühlleistung kleiner, als der temperaturabhängig bestimmte Mindestsollwert, wird erfindungsgemäß der von der überlagerten Steuerung gelieferte Sollwert revidiert, das heißt, er wird auf den aktuellen Wert des Mindestsollwerts erhöht. Dadurch erreicht man eine höhere Sicherheit und Verfügbarkeit in der Anlage.

Eine weitere Möglichkeit die Funktion der überlagerten Einheit auf Plausibilität zu überprüfen besteht darin, dass das Kühlsystem überwacht, ob die überlagerte Steuerung im Falle von steigenden Temperaturwerten den Sollwert erhöht. Werden Temperatursteigerungen in der Anlage oder in der Umgebung registriert und erhöht die überlagerte Steuerung den Sollwert für die Kühlleistung (z.B. für die Lüfterdrehzahl) nicht innerhalb eines akzeptablen Zeitintervalls, kann man von einem Fehler in der Sollwertvorgabe ausgehen. In diesem, von der Elektronik erkannten, Fehlerfall wird wiederum die Kühlleistung (im Falle eines Lüfters die Drehzahl) erhöht. Die in diesem Fall vorgegebene, korrigierte Drehzahl wird entweder aus dem vom Temperatursensor gelieferten Signalwert bestimmt, oder man verwendet für solche Notfälle eine temperaturunabhängige, vorbestimmte Drehzahl. So kann es zum Beispiel sinnvoll sein, bei solchen Fehlern die maximale Drehzahl für den Lüftermotor vorzugeben.

In einer weiteren Variante dieser Lösung werden nicht oder nicht nur Temperaturwerte in Betracht bezogen. So kann zum Beispiel die Stromaufnahme, die Leistungsaufnahme, die Drehzahl und/oder das Drehmoment eines Antriebsmotors der Anlage für die Bestimmung einer betriebsbedingten minimalen Kühlleistung benutzt werden. Ähnlicherweise können auch Steuersignale für bestimmte Betriebsarten in der Anlage, z.B. Aktivierungssignale für bestimmte Aktoren, oder bestimmte Sensorsignale für diese Funktion verwendet werden. Liefert die überlagerte Einheit einen kleineren Wert als aus diesen zusätzlichen Signalen festgelegten minimalen Wert oder erhöht die überlagerte Einheit bei entsprechender Änderung dieser zusätzlichen Signale nicht in einem akzeptablen Zeitintervall, erhöht das Kühlsystem autonom seine Kühlleistung.

In einer zweiten Ausführung der Erfindung wird das Kühlsystem mit einer lernfähigen Einheit ergänzt. Diese lernfähige Einheit, die auf bekannten Methoden des maschinellen Lernens basieren kann, lernt die notwendige Kühlleistung vorherzusagen. Dazu verwertet die besagte lernfähige Einheit zusätzliche Informationen aus der Anlage oder aus der Umgebung der Anlage, wie es bei der ersten Ausführung der Erfindung bereits beschrieben wurde. Ist der von der überlagerten Einheit erhaltene Sollwert für die Kühlleistung kleiner als der prognostizierte Wert, wird der Sollwert autonom revidiert, um größeren Schaden in der Anlage zu verhindern.

In einer dritten Ausführung der Erfindung wird das Kühlsystem ebenso mit einer lernfähigen Einheit ergänzt, wobei diese lernfähigen Einheit zeitweise oder generell keine weiteren Informationen als die Sollwertvorgabe für die Kühlleistung selber zur Verfügung stehen.

Ein Weg um eine mögliche Fehlfunktion in der Sollwertvorgabe für die Kühlleistung zu erkennen besteht darin, dass die lernfähige Einheit betriebsbedingte Strukturen in der Vorgabe lernt und Abweichungen automatisch erkennt. Bei einer erkannten Abweichung vom üblichen Ablauf kann das Kühlsystem vorsichtshalber autonom die Kühlleistung erhöhen.

Ein weiterer Weg Überhitzungen zu vermeiden wird in dieser Ausführung dadurch ermöglicht, dass das Kühlsystem lernt, wie es vorhersagen kann, wann die überlagerte Steuerung den Sollwert bis auf die maximale Kühlleistung erhöht. Wenn die Steuerung die maximale Kühlleistung verlangt, bedeutet dies, dass möglicherweise Bedarf für eine noch höhere Kühlleistung vorhanden ist, die aber vom Kühlsystem nicht mehr geliefert werden kann. Dadurch wächst die Gefahr, dass sich die zu kühlende Anlage überhitzt. Würde die überlagerte Einheit bereits in einem früheren Zeitpunkt eine höhere Kühlleistung verlangen, würde die Anlage vor dem Ereignis, die die maximale Kühlleistung nötig gemacht hat, die Temperatur der Anlage vorsorglich senken. Dadurch könnte die Wahrscheinlichkeit oder zumindest die Dauer der Überhitzung reduziert werden. Dementsprechend wird die lernfähige Einheit trainiert, um vorhersagen zu können, wann die überlagerte Einheit typischerweise maximale Kühlleistung verlangt. Anhand dieser Prognose kann sie die Kühlleistung bereits vor diesem Ereignis vorausschauend erhöhen. Dadurch ist das Kühlsystem nicht nur in der Lage, einen Ausfall der überlagerten Einheit, sondern auch ihre suboptimale Steuerungs-/Regelungsstrategie zu erkennen. Diese suboptimale Strategie der überlagerten Einheit kann auch im weiteren Sinne als eine Fehlfunktion betrachtet werden. Mit der vorgeschlagenen Methode kann das Kühlsystem diese Fehlfunktion in gewissem Maße korrigieren und so einen sichereren Betrieb für die zu kühlende Anlage ermöglichen.

Gibt die überlagerte Einheit den Sollwert für die Kühlleistung in Abhängigkeit von Temperaturwerten in der Anlage vor, besteht für das Kühlsystem auch die Möglichkeit, die Funktionsfähigkeit der überlagerten Einheit dadurch zu testen, dass es gelegentlich (z.B. mit einer vorgegebenen Periodizität) die Kühlleistung autonom variiert (z.B. erhöht) und analysiert, ob die überlagerte Einheit auf die von der veränderten Kühlleistung hervorgerufene Temperaturänderung in der Anlage reagiert. Ist das nicht der Fall, kann man von einer Fehlfunktion der besagten überlagerten Einheit ausgehen. Hier kann das Kühlsystem vorsichtshalber seine Kühlleistung erhöhen, um eine potentielle Überhitzung der zu kühlenden Anlage zu verhindern.

In der vierten Ausführung der Erfindung benutzt das Kühlsystem eine als Anomalieerkennung ("Anomaly Detection") in der Literatur bekannte Methode, um Fehlfunktionen der überlagerten Steuerung zu erkennen und um darauf sicherheitshalber mit Erhöhung der Kühlleistung zu reagieren. Ein bekannter Weg für die besagte Anomalieerkennung basiert auf einem statistischen Modell. Dabei werden statistische Verteilungen ausgewählter Kenngrößen im Normalbetrieb berechnet. Eine dieser Kenngrößen muss erfindungsgemäß der von der überlagerten Einheit vorgegebene Sollwert für die Kühlleistung sein. Im späteren Betrieb nach der Berechnung der besagten statistischen Verteilung wird die aktuelle Sollwertvorgabe auf die Wahrscheinlichkeit anhand dieser statischen Verteilung bewertet. Eine kleinere berechnete Wahrscheinlichkeit als ein vorgegebener Grenzwert weist auf eine Anomalie auf.

Für die Anomalieerkennung in Merkmalräume mit höherer Dimensionalität sind in der Fachliteratur auch Lösungen mit den Methoden "one-class SVM" (Support Vector Machine") und "PCA" (Principal Component Analysis) bekannt und können in der Realisierung der Erfindung verwendet werden.

Die erkannte Anomalie wird möglicherweise durch eine Fehlfunktion der überlagerten Steuerung verursacht, deshalb soll hier das Kühlsystem vorsichthalber seine Kühlleistung erhöhen. Zum Beispiel ein Lüfter erhöht in so einem Fall seine Drehzahl autonom.

### Beschreibung der lernfähigen Einheit

Die in den einzelnen Ausführungen der Erfindung teilweise verwendete lernfähige Einheit kann im einfachsten Fall zeitliche Periodizität bei dem Kühlbedarf erkennen. Viele Anlagen weisen solche Periodizität auf, was mit dem Prozess in einer Fertigungsanlage, mit dem Tagesverlauf, mit dem Wochenverlauf und/oder mit dem Jahresverlauf in Verbindung stehen kann. So kann in Abhängigkeit von der Produktionstätigkeit in einer Fabrik, bei der nur in ein oder in zwei Schichten gearbeitet wird, durch die Periodizität der Betriebsamkeit und/oder die Periodizität von äußerlichen Bedingungen, wie Außentemperatur, eine starke periodische Schwankung in der notwendigen Kühlleistung entstehen. Die lernfähige Einheit kann diese Schwankungen statistisch erfassen und zur Prognose des notwendigen Kühlbedarfs nutzen.

Moderne lernende Maschinen sind außerdem bekanntlich in der Lage, auch komplexere Muster in Signalen zu erkennen. Deshalb kann es sinnvoll sein, die lernfähige Einheit mit Hilfe einer aus der Theorie der lernenden Systemen ("Machine Learning") bekannten Lernmethode zu betreiben. Solche Methoden sind unter anderem "Decision Tree Learning", "k-Nearest Neighbor", "Linear Regression", "Logistic Regression", "Winnow", "LASSO", "Ridge Regression", "ARIMA", "Perceptron", "Artificial Neural Networks", "Deep Learning", "Naive Bayes", "Baysian Network", "Support Vector Machine", "Boosting", "Reinforcement Learning", "Markov Chain", "Hidden Markov Model" usw. Es ist aber auch möglich, mehrere dieser Lernmethoden beliebig zu kombinieren.

Viele von den bekannten Methoden für das maschinelle Lernen, wie Perceptron, Winnow, Logistic Regression, haben auch online Versionen, die von den erhaltenen Daten kontinuierlich lernen können. Bei Verwendung solcher Methoden kann die Qualität der Vorhersage des zukünftigen Kühlbedarfs während des Betriebs ständig verbessert werden. Einige von den genannten Methoden lernen nicht-lineare Funktionen, andere, wie Perceptron, Logistic Regression oder Support Vector Machine haben auch "kernelized" Versionen für linear nicht separierbare Daten.

Eingänge der erfindungsgemäßen lernfähigen Einheit sind die auszuwertenden internen und/oder externen Signale bzw. Systemgrößen.

Der Ausgang der lernfähigen Einheit ist abhängig vom Typ der verwendeten Lernmethode. Einige Methoden (wie Boosting, k-NN, Decision Tree, SVM) teilen das Ergebnis in verschiedene Kategorien ein ("discrete classifier"). Diese Kategorien entsprechen der vordefinierten Bereichen des Kühlbedarfs, z.B. 10-20%, 20-40%, 40-60%, 60-80% und 80-100%.

Falls die lernende Einheit nicht den Kühlbedarf selber prognostizieren soll, sondern die Aufgabe hat festzustellen, ob die überlagerte Einheit korrekt arbeitet, reichen zwei Kategorien als Ausgang aus. In diesem Fall würde zum Beispiel die Ausgangkategorie '0' dem korrekten Betrieb und die Kategorie '1' dem fehlerhaften Betrieb entsprechen. Falls der Ausgang der lernfähigen Einheit '1' ist, wird erfindungsgemäß die Kühlleistung des Kühlsystems erhöht.

Andere Methoden (wie Naive Bayes, Bayesian Nets, Logistic Regression, Neural Nets) liefern die Wahrscheinlichkeit, dass das Ergebnis in die einzelnen Kategorien fällt. Üblicherweise wird bei solchen Methoden die Kategorie mit der maximalen Wahrscheinlichkeit ausgewählt und als Prognose verwendet. In unserem Fall jedoch möchte man eine Fehlkategorisierung in eine Richtung (zu niedrige Prognose für den Kühlbedarf) unbedingt vermeiden. Deshalb ist es hier empfehlenswert die höchste Kategorie als Prognose nehmen, bei der die entsprechende Wahrscheinlichkeit einen vorher definierten minimalen Grenzwert noch überschreitet. Das bedeutet, dass alle Kategorien mit einem noch höheren Prognosenwert sehr unwahrscheinlich sein müssen. Es ist jedoch auch möglich, die berechneten Wahrscheinlichkeiten angefangen von den höheren Kategorien zu addieren und diejenige Kategorie als Prognose auszuwählen, bei der die Summe der Wahrscheinlichkeiten einen Grenzwert bereits überschreitet. Damit wird erreicht, dass eine Fehleinschätzung des Kühlbedarfs in die unerwünschte Richtung (nach unten) nur mit einer vorher definierten, sehr niedrigen Wahrscheinlichkeit vorkommen kann.

Es gibt bekannte Lernmethoden ("Regression"), die einen kontinuierlichen Ausgang haben. Solche Methoden sind zum Beispiel: Linear Regression, ARIMA, Lasso, Ridge Regression, SVM Regression. Sie alle liefern eine reale Zahl aus Ausgangswert. Diese Zahl entspricht in diesem Fall dem minimal notwendigen Kühlbedarf. Besteht das Kühlsystem im Wesentlichen aus einem oder mehreren Lüftern, liefert die lernfähige Einheit als Prognose die minimale Lüfterdrehzahl. Eine zu hohe Drehzahl erhöht zwar die Leistungsaufnahme des Lüfters und dessen Geräuschemission, stört aber den eigentlichen Betrieb meistens nicht. Ein Fehler in die andere Richtung (zu niedrige Drehzahl, bzw. im Allgemeinen zu niedrige Kühlleistung) beeinflusst jedoch die Sicherheit der Anlage negativ und kann zum Beispiel zum frühzeitigen Ausfall führen. Deshalb muss die Fehlerfunktion ("Error Measure"), auch Kostenfunktion genannt, immer so gestaltet werden, dass eine zu niedrige Drehzahl viel stärker bestraft wird als eine Drehzahl, die größer ist, als unbedingt notwendig. Liefert die lernfähige Einheit einen höheren Drehzahlwert, als der von der überlagerten Einheit lieferten Drehzahlsollwert, wird dieser Wert erfindungsgemäß nach oben korrigiert.

Für die meisten oben erwähnten Lernmethoden stehen fertige Softwarelösungen als Bibliotheken zur Verfügung.

Weitere Möglichkeit für die Realisierung der lernfähigen Einheit ist die Entwicklung einer speziell für diese Aufgabe gestaltete Lernmethode. Als erster Schritt wird die Kostenfunktion definiert. Dabei ist darauf zu achten, dass eine Abweichung vom tatsächlichen Kühlbedarf in die negative Richtung (zu niedrige Prognose) stärker bestraft wird, als in die entgegengesetzte Richtung (zu hohe Prognose). Falls diese Kostenfunktion mathematisch nicht konvex ist, wird als zweiter Schritt eine konvexe Näherung gesucht. Danach wird das Minimum der Kostenfunktion mit einer bekannter Optimierungsmethode gesucht. Solche Methoden sind zum Beispiel: "Batch Gradient Descent" (BGD) oder "Stochastic Gradient Descent" (SGD). Letztere ist auch für eine on-line Lernmethode geeignet. Durch die Konvexität der Kostenfunktion ist es gewährleistet, dass die genannten Methoden nicht in einem lokalen Minimum steckenbleiben können. Nachdem das globale Minimum der Kostenfunktion gefunden wurde, entsprechen die Koordinaten des Minimums im mehrdimensionalen Merkmalraum ("feature space") den optimalen Parametern für die gesuchte Hypothese. Diese Parameter definieren dann die mathematische Funktion für die Berechnung der Kühlbedarfsprognose.

Bei einer Anlage, bei der Aktoren und Sensoren in großer Zahl miteinander verbunden sind, z.B. durch einen interbasierten Kommunikationskanal ("Industrie 4.0"), können dem Kühlsystem sehr viele Signale zur Verfügung stehen, die weder alleine noch mit anderen Signalen zusammen bei der Voraussagung des Kühlbedarfs behilflich sein können. Werden auch diese Signale beim Lernprozess verwendet, kann es dazu führen, dass der Merkmalraum ("feature space") eine zu hohe Dimensionalität aufweist und dadurch der Lernprozess erschwert wird. Um die Aufgabe mit technisch und wirtschaftlich verkraftbarem Aufwand und in akzeptablem Zeitrahmen lösen zu können, kann es deshalb zweckdienlich sein, nicht-relevante Signale aus dem Lernprozess auszuschließen ("dimensionality reduction"). Die Auswahl der Signale, welche für den Lernprozess verwendet werden, die Aufnahmedauer der Daten, die Auflösung der Digitalisierung und die zeitliche Auflösung (sample rate) kann durch die lernfähige Einheit im Antrieb selber optimiert werden.

Für die besagte Auswahl der Signale oft kann mit einfacher Korrelationsrechnung festgestellt werden, ob bestimmte Signale mit dem zu prognostizierenden Werten (zukünftiger Kühlbedarf) korrelieren und so zu Vorhersagen eignen. Dazu muss zum Beispiel die Kreuzkorrelationsfunktion oder das Kreuzleistungsspektrum berechnet und ausgewertet werden, wie es in der Signalanalyse üblich ist. Es gibt jedoch Fälle, bei denen einzelne Signale mit dem Ausgangssignal keine Korrelation aufweisen, mit anderen Kenngrößen zusammen jedoch für die Prognose verwendbar sind. Für solche Fälle stehen mehrere, in der Literatur bekannte Methoden zur Verfügung, die unter dem Oberbegriff "feature selection", "feature filtering", "feature wrapping" oder "feature transformation" beschrieben werden. Einige solche Methoden sind:
- Principal Components Analysis (PCA)
- Independent Components Analysis (ICA)
- Random Components Analysis (RCA)
- Linear Discriminant Analysis (LDA)

Die erfindungsgemäße Lösung kann unabhängig von Ventilatortyp (radial, axial, diagonal, Querstromlüfter, usw.), vom Motortyp (Innenläufer/Außenläufer, Gleichstrom-, Wechselstrom- oder Drehstrommotor bzw. bürstenloser oder elektronisch kommutierter Motor) eingesetzt werden. Es spielt bei der Verwendung im Prinzip auch keine Rolle, ob die Drehzahlsteuerung bzw. -regelung des Ventilators in einer externen Elektronikeinheit realisiert ist oder ob diese elektronische Schaltung im Lüfter integriert ist, wie es z.B. bei Kompaktlüftern üblich ist.

Die vorigen Beschreibungen basieren teilweise auf Lüfteranwendungen. Die Erfindung beschränkt sich jedoch nicht auf Lüfter und Ventilatoren; vielmehr ist sie auch für andere Kühlsysteme mit veränderbarer Kühlleistung verwendbar. Sie kann zum Beispiel für Pumpen bei einer Flüssigkeitskühlung, wie Wasser- oder Ölkühlung, eingesetzt werden. Das gleiche gilt auch für aktive Kühlungen, wie Kühlaggregate. Weiterhin ist die Erfindung nicht nur auf die dargestellten und beschriebenen Ausführungsbeispiele beschränkt, sondern umfasst auch alle im Sinne der Erfindung gleichwirkenden Ausführungen.

## Patentansprüche

1. Verfahren zum Steuern eines Kühlsystems (2) mit variabler Kühlleistung, das neben dem Sollwert, der die von der überlagerten Einheit (1) vorgegebene Kühlleistung angibt, Informationen aus der zu kühlenden Anlage und/oder aus der Umgebung erhält, **dadurch gekennzeichnet, dass** das Kühlsystem (2) anhand dieser Informationen den Wert des von der überlagerten Einheit (1) gelieferten Sollwerts auf Plausibilität überprüft und in dem Fall, dass eine potentielle Fehlfunktion der überlagerten Einheit (1) bei der Sollwertvorgabe erkannt wird, das Kühlsystem (2) seine Kühlleistung vorsichtshalber autonom erhöht, um die negativen Auswirkungen einer eventuell falschen Sollwertvorgabe durch die überlagerte Einheit (1) zu vermindern.

2. Verfahren nach Anspruch 1, **dadurch gekennzeichnet, dass** Temperaturwerte aus der zu kühlenden Anlage und/oder aus der Umgebung ausgewertet werden und eine Fehlfunktion der überlagerten Einheit (1) bei der Sollwertvorgabe dadurch erkannt wird, dass der Sollwert trotz steigenden Temperaturwerten nicht innerhalb eines Zeitintervalls von der überlagerten Einheit (1) erhöht wird.

3. Verfahren nach Anspruch 1, **dadurch gekennzeichnet, dass** das Kühlsystem (2) seine Kühlleistung autonom variiert und eine Fehlfunktion der überlagerten Einheit (1) bei der Sollwertvorgabe dadurch erkannt wird, dass der von der übergelagerten Einheit (1) gelieferte Sollwert auf die von der veränderten Kühlleistung hervorgerufene Temperaturänderung in der Anlage nicht reagiert.

4. Verfahren nach Anspruch 1, **dadurch gekennzeichnet, dass** ein vom Sollwert unabhängiger minimaler aktueller Kühlbedarf aus den dem Kühlsystem zu Verfügung stehenden Informationen bestimmt wird und eine Fehlfunktion der überlagerten Einheit (1) bei der Sollwertvorgabe dadurch erkannt wird, dass der von der überlagerten Einheit (1) gelieferte Sollwert kleiner ist, als der so bestimmte minimale Kühlbedarf.

5. Verfahren nach Anspruch 1, **dadurch gekennzeichnet, dass** statistische Verteilungen ausgewählter Kenngrößen im Normalbetrieb berechnet werden, die Wahrscheinlichkeit der aktuellen Sollwertvorgabe anhand dieser statistischen Verteilung berechnet wird und eine Fehlfunktion der überlagerten Einheit (1) bei der Sollwertvorgabe dadurch erkannt wird, dass die berechnete Wahrscheinlichkeit der aktuellen Sollwertvorgabe kleiner als ein vorgegebener Grenzwert ist.

6. Verfahren nach Anspruch 1, **dadurch gekennzeichnet, dass** eine lernfähige Einheit (6) aus der Vorgabe für die Kühlleistung und/oder aus Informationen aus der zu kühlenden Anlage und/oder aus dem Umfeld der Anlage den aktuellen Wert der notwendigen Kühlleistung des Kühlsystems (2) zu prognostizieren lernt, die besagte lernfähige Einheit (6) nach einer erfolgreichen Lernphase die notwendige Kühlleistung prognostiziert und eine Fehlfunktion der überlagerten Einheit (1) bei der Sollwertvorgabe dadurch erkannt wird, dass der von der überlagerten Einheit (1) gelieferte Sollwert kleiner ist, als die prognostizierte notwendige Kühlleistung.

7. Verfahren nach Anspruch 6, **dadurch gekennzeichnet, dass** eine konvexe oder näherungsweise konvexe Kostenfunktion für das Lernen des Kühlbedarfs definiert wird, wobei ein Fehler in Richtung von niedrigerer notwendiger Kühlleistung durch die Kostenfunktion stärker bestraft wird, als ein Fehler in die entgegengesetzte Richtung, das Minimum der besagten Kostenfunktion berechnet wird und durch die Kenngrößen am Ort dieses Minimums für die Definition einer Funktion verwendet wird, die für die Prognose des für einen sicheren Betrieb mindestens notwendigen Kühlbedarfs benutzt wird.

8. Verfahren nach Anspruch 6, **dadurch gekennzeichnet, dass** die lernfähige Einheit (6) mit einer, oder mit einer Kombination von mehreren bekannten mathematischen Lernmethoden, wie Decision Tree Learning, k-Nearest Neighbor, Linear Regression, Logistic Regression, Winnow, LASSO, Ridge Regression, ARIMA, Perceptron, Artificial Neural Networks, Deep Learning, Naive Bayes, Baysian Network, Support Vector Machine, Boosting, Reinforcement Learning, Markov Chain oder Hidden Markov Model arbeitet.

9. Verfahren nach Anspruch 6, **dadurch gekennzeichnet, dass** die lernfähige Einheit (6) aus den zur Verfügung stehenden Daten zusätzlich lernt vorherzusagen, wann die überlagerte Einheit (6) maximale Kühlleistung verlangt und bereits vor diesem Ereignis die Kühlleistung autonom erhöht um die Anlage gegenüber Überhitzung besser zu schützen.

10. Verfahren nach Anspruch 6, **dadurch gekennzeichnet, dass** die lernfähige Einheit (6) nur ein Teil der zur Verfügung stehenden Informationen zum Lernprozess verwendet, wobei die Auswahl der verwendeten Informationen durch eine Methode wie Korrelationsrechnung, Principal Components Analysis (PCA), Independent Components Analysis (ICA), Random Components Analysis (RCA) oder Linear Discriminant Analysis (LDA) bestimmt wird.

11. Kühlsystem (2) mit veränderbarer Kühlleistung, **dadurch gekennzeichnet, dass** das Kühlsystem (2) ein lernende Einheit (6) enthält, die aus externen und internen Signalen die aktuell notwendige Kühlleistung zu prognostizieren lernt, das Kühlsystem (2) die Prognose über die notwendige Kühlleistung mit dem von der überlagerten Einheit (1) gelieferten Sollwert vergleicht und wenn der Sollwert für die Kühlleistung kleiner als der prognostizierte Wert ist, das Kühlsystem seine Kühlleistung autonom erhöht.

12. Kühlsystem (2) nach Anspruch 11, **dadurch gekennzeichnet, dass** ein Verfahren nach einem der Ansprüche 1 bis 10 verwendet wird.

13. Kühlsystem (2) nach Anspruch 11, **dadurch gekennzeichnet, dass** das Kühlsystem (2) im Wesentlichen aus einem oder mehreren Lüftern besteht und die Kühlleistung über die Änderung der Drehzahl der Lüftermotoren beeinflusst wird.

14. Kühlsystem (2) nach Anspruch 11, **dadurch gekennzeichnet, dass** das Kühlsystem (2) im Wesentlichen nach dem Prinzip der Flüssigkeitskühlung arbeitet, wobei die Kühlflüssigkeit durch eine oder mehrere Pumpen bewegt wird.

15. Kühlsystem (2) nach Anspruch 11, **dadurch gekennzeichnet, dass** das Kühlsystem (2) bei einer erkannten Fehlfunktion der überlagerten Einheit (1) bei der Sollwertvorgabe eine Warnung ausgibt.

## Claims

1. Method for controlling a cooling system (2) with variable cooling capacity which, in addition to the setpoint value determining the cooling capacity specified by the superimposed unit (1), receives information from the equipment to be cooled and/or from the environment, **characterized in that** the cooling system (2) uses this information to check the setpoint value supplied by the superimposed unit (1) for plausibility and, in the case that a potential malfunction of the superimposed unit (1) during the setpoint setting is detected, the cooling system (2) autonomously increases its cooling capacity as a precaution in order to reduce the negative effects of a possibly incorrect setpoint setting by the superimposed unit (1).

2. Method according to claim 1, **characterized in that** temperature values from the equipment to be cooled and/or from the environment are evaluated and a malfunction of the superimposed unit (1) is detected in the setpoint setting **in that** the setpoint is not increased within a time interval by the superimposed unit (1) despite rising temperature values.

3. Method according to claim 1, **characterized in that** the cooling system (2) varies its cooling capacity autonomously and a malfunction of the superimposed unit (1) in the setpoint setting is detected **in that** the setpoint supplied by the superimposed unit (1) does not react to the temperature change in the equipment caused by the changed cooling capacity.

4. Method according to claim 1, **characterized in that** a minimum current cooling requirement independent of the setpoint value is determined from the information available to the cooling system and a malfunction of the superimposed unit (1) during the setpoint setting is detected **in that** the setpoint value supplied by the superimposed unit (1) is lower than the minimum cooling requirement thus determined.

5. Method according to claim 1, **characterized in that** statistical distributions of selected characteristic quantities are calculated in normal operation, the probability of the current nominal value specification is calculated using this statistical distribution, and a malfunction of the superimposed unit (1) during the setpoint setting is detected **in that** the calculated likelihood of the current nominal value specification is less than a specified threshold value.

6. Method according to claim 1, **characterized in that** a unit (6) capable of learning learns to predict the current value of the necessary cooling capacity of the cooling system (2) from the setpoint setting for the cooling capacity and/or from information from the equipment to be cooled and/or from the environment of the equipment, the said unit (6) capable of learning forecasts the necessary cooling capacity after a successful learning phase and a malfunction of the superimposed unit (1) during the setpoint setting is detected **in that** the setpoint supplied by the superimposed unit (1) is lower than the forecast for the necessary cooling capacity.

7. Method according to claim 6, **characterized in that** a convex or approximately convex cost function is defined for learning the cooling demand, whereby an error in the direction of lower necessary cooling capacity is penalized more strongly by the cost function than an error in the opposite direction, the minimum of said cost function is calculated and used by the characteristics at the location of said minimum for defining a function which is used for predicting the minimum necessary cooling demand for safe operation.

8. Method according to claim 6, **characterized in that** the unit (6) capable of learning works with one, or with a combination of several known mathematical learning methods, such as Decision Tree Learning, k-Nearest Neighbor, Linear Regression, Logistic Regression, Winnow, LASSO, Ridge Regression, ARIMA, Perceptron, Artificial Neural Networks, Deep Learning, Naive Bayes, Bayesian Network, Support Vector Machine, Boosting, Reinforcement Learning, Markov Chain or Hidden Markov Model.

9. Method according to claim 6, **characterized in that** the unit (6) capable of learning additionally learns from available data to predict when the superimposed unit (1) requires maximum cooling capacity and autonomously increases the cooling capacity already before this event in order to better protect the plant against overheating.

10. Method according to claim 6, **characterized in that** the unit (6) capable of learning uses only part of the available information for the learning process, the selection of the information used is determined by a method such as correlation calculation, principal components analysis (PCA), independent components analysis (ICA), random components analysis (RCA), or linear discriminant analysis (LDA).

11. Cooling system (2) with variable cooling capacity, **characterized in that** the cooling system (2) comprises a learning unit (6) which learns to forecast the currently required cooling capacity from external and internal signals, the cooling system (2) compares the forecast of the required cooling capacity with the setpoint value supplied by the superimposed unit (1), and if the setpoint value for the cooling capacity is smaller than the forecast value, the cooling system increases its cooling capacity autonomously.

12. A cooling system (2) according to claim 11, **characterized in that** a method according to one of claims 1 to 10 is used.

13. Cooling system (2) according to claim 11, **characterized in that** the cooling system (2) essentially comprises of one or more fans and the cooling capacity is influenced by changing the rotational speed of the fan motors.

14. Cooling system (2) according to claim 11, **characterized in that** the cooling system (2) essentially operates on the principle of liquid cooling, whereby the cooling liquid is moved by one or more pumps.

15. Cooling system (2) according to claim 11, **characterized in that** the cooling system (2) issues a warning in the event of a detected malfunction of the superimposed unit (1) during the setpoint setting.

## Revendications

1. Procédé de commande d'un système de refroidissement (2) à puissance frigorifique variable qui, outre la valeur de consigne déterminant la puissance frigorifique prescrite par l'unité de superposition (1), reçoit des informations de l'équipement à refroidir et/ou de l'environnement, **caractérisé en ce que** le système de refroidissement (2) utilise ces informations pour vérifier la plausibilité de la valeur de consigne fournie par l'unité de superposition (1) et, dans le cas où un dysfonctionnement potentiel de l'unité superposée (1) pendant le réglage du point de consigne est détecté, le système de refroidissement (2) augmente de manière autonome sa capacité de refroidissement par précaution afin de réduire les effets négatifs d'un éventuel mauvais réglage du point de consigne par l'unité superposée (1).

2. Procédé selon la revendication 1, **caractérisé en ce que** les valeurs de température de l'équipement à refroidir et/ou de l'environnement sont évaluées et un dysfonctionnement de l'unité de surimposition (1) est détecté lors du réglage de la valeur de consigne **en ce que** la valeur de consigne n'est pas augmentée dans un intervalle de temps par l'unité de surimposition (1) malgré des valeurs de température en hausse.

3. Procédé selon la revendication 1, **caractérisé en ce que** le système de refroidissement (2) varie sa capacité de refroidissement de manière autonome et un dysfonctionnement de l'unité superposée (1) dans le réglage de la valeur de consigne est détecté **en ce que** la valeur de consigne fournie par l'unité superposée (1) ne réagit pas au changement de température de l'équipement provoqué par la capacité de refroidissement modifiée.

4. Procédé selon la revendication 1, **caractérisé en ce que** l'on détermine un besoin de refroidissement minimal actuel indépendant de la valeur de consigne à partir des informations dont dispose le système de refroidissement et **en ce que** l'on détecte un dysfonctionnement de l'unité de superposition (1) lors du réglage de la valeur de consigne **en ce que** la valeur de consigne fournie par l'unité de superposition (1) est inférieure au besoin de refroidissement minimal ainsi déterminé.

5. Procédé selon la revendication 1, **caractérisé en ce que** des distributions statistiques de grandeurs caractéristiques sélectionnées sont calculées en fonctionnement normal, la probabilité de la spécification de la valeur nominale actuelle est calculée en utilisant cette distribution statistique, et un dysfonctionnement de l'unité de superposition (1) pendant le réglage de la valeur de consigne est détecté **en ce que** la probabilité calculée de la spécification de la valeur nominale actuelle est inférieure à une valeur seuil spécifiée.

6. Procédé selon la revendication 1, **caractérisé en ce qu'**une unité (6) capable d'apprendre apprend à prévoir la valeur actuelle de la capacité de refroidissement nécessaire du système de refroidissement (2) à partir du réglage de la valeur de consigne pour la capacité de refroidissement et/ou à partir d'informations provenant de l'équipement à refroidir et/ou de l'environnement de l'équipement, ladite unité (6) capable d'apprendre prévoit la capacité de refroidissement nécessaire après une phase d'apprentissage réussie et un dysfonctionnement de l'unité superposée (1) pendant le réglage de la valeur de consigne est détecté **en ce que** la valeur de consigne fournie par l'unité superposée (1) est inférieure à la prévision pour la capacité de refroidissement nécessaire.

7. Méthode selon la revendication 6, **caractérisée en ce qu'**une fonction de coût convexe ou approximativement convexe est définie pour l'apprentissage de la demande de refroidissement, par laquelle une erreur dans le sens d'une capacité de refroidissement nécessaire inférieure est pénalisée plus fortement par la fonction de coût qu'une erreur dans le sens opposé, le minimum de ladite fonction de coût est calculé et utilisé par les caractéristiques à l'emplacement dudit minimum pour définir une fonction qui est utilisée pour prévoir la demande de refroidissement nécessaire minimale pour un fonctionnement sûr.

8. Méthode selon la revendication 6, **caractérisée en ce que** l'unité (6) capable d'apprendre fonctionne avec une, ou avec une combinaison de plusieurs méthodes d'apprentissage mathématique connues, telles que l'apprentissage par arbre de décision, k-Voisin le plus proche, Régression linéaire, Régression logistique, Winnow, LASSO, Régression de crête, ARIMA, Perceptron, Réseaux neuronaux artificiels, Apprentissage profond, Bayes naïf, Réseau bayésien, Machine à vecteur de soutien, Boosting, Apprentissage de renforcement, Chaîne de Markov ou Modèle de Markov caché.

9. Méthode selon la revendication 6, **caractérisée en ce que** l'unité (6) capable d'apprendre apprend en outre à partir des données disponibles pour prévoir quand l'unité superposée (1) nécessite une capacité de refroidissement maximale et augmente de manière autonome la capacité de refroidissement déjà avant cet événement afin de mieux protéger l'installation contre la surchauffe.

10. Méthode selon la revendication 6, **caractérisée en ce que** l'unité (6) capable d'apprendre utilise seulement une partie des informations disponibles pour le processus d'apprentissage, la sélection des informations utilisées est déterminée par une méthode telle que le calcul de corrélation, l'analyse en composantes principales (ACP), l'analyse en composantes indépendantes (ICA), l'analyse en composantes aléatoires (RCA) ou l'analyse discriminante linéaire (LDA).

11. Système de refroidissement (2) à capacité de refroidissement variable, **caractérisé en ce que** le système de refroidissement (2) comprend une unité d'apprentissage (6) qui apprend à prévoir la capacité de refroidissement actuellement nécessaire à partir de signaux externes et internes, le système de refroidissement (2) compare la prévision de la capacité de refroidissement nécessaire avec la valeur de consigne fournie par l'unité superposée (1), et si la valeur de consigne de la capacité de refroidissement est inférieure à la valeur prévue, le système de refroidissement augmente sa capacité de refroidissement de manière autonome.

12. Un système de refroidissement (2) selon la revendication 11, **caractérisé en ce qu'**une méthode selon l'une des revendications 1 à 10 est utilisée.

13. Système de refroidissement (2) selon la revendication 11, **caractérisé en ce que** le système de refroidissement (2) comprend essentiellement en un ou plusieurs ventilateurs et la capacité de refroidissement est influencée par la modification de la vitesse de rotation des moteurs des ventilateurs.

14. Système de refroidissement (2) selon la revendication 11, **caractérisé en ce que** le système de refroidissement (2) fonctionne essentiellement sur le principe du refroidissement par liquide, le liquide de refroidissement étant déplacé par une ou plusieurs pompes.

15. Système de refroidissement (2) selon la revendication 11, **caractérisé en ce que** le système de refroidissement (2) émet un avertissement en cas de détection d'un dysfonctionnement de l'unité superposée (1) pendant le réglage du point de consigne.
